# EUROPEAN PATENT SPECIFICATION

(11) **EP 3 560 977 B1**
(45) Date of publication and mention of the grant of the patent: **01.06.2022**
(21) Application number: 19163346.0
(22) Date of filing: 18.03.2019
(51) Int. Cl.: C08G 59/00, C08G 59/42, C09D 5/03, C08G 59/50, C08G 59/68

(54) **CURABLE EPOXY COMPOSITIONS**
HÄRTBARE EPOXIDZUSAMMENSETZUNGEN
COMPOSITIONS ÉPOXY DURCISSABLES

(30) Priority: 26.04.2018 EP 18169507; 04.01.2019 US 201916239709
(43) Date of publication of application: 30.10.2019
(73) Proprietor: SHPP Global Technologies B.V., 4612 PX Bergen op Zoom (NL)
(72) Inventor: Agrawal, Mukesh, 562125 Bangalore, Karnataka (IN); Verghese, Nikhil K. E., Sugar Land, TX Texas 77478 (US)
(74) Representative: Modiano, Micaela Nadia

(56) References cited:
- WO-A1-2009/129088
- US-A- 3 914 512
- US-A- 3 989 573
- US-A1- 2014 005 344

## Description

### BACKGROUND

Thermoset polymers are used in a wide variety of consumer and industrial products including protective coatings, adhesives, electronic laminates (such as those used in the fabrication of printed circuit boards), flooring and paving, glass fiber-reinforced pipes, and automotive parts (such as leaf springs, pumps, and electrical components). Thermoset epoxies are derived from thermosetting epoxy resins that are polymerized in the presence of a co-reactive curing agent (also referred to in the art as a hardener), a catalytic curing agent (also referred to in the art as a cure accelerator or a catalyst), to afford a cured thermoset polymer.

Anhydride curing agents can be used to provide higher heat properties, better electrical properties, longer pot life, and lower shrinkage to cured epoxies. Examples of anhydride curing agents include norbornene dicarboxylic anhydride, hexahydrophthalic anhydride, tetrahydrophthalic anhydride, phthalic anhydride, trimellitic anhydride, pyromellitic dianhydride, and benzophenone tetracarboxylic dianhydride. However, these anhydride curing agents can release undesirable heat during curing that can lead to shrinkage, and have long curing times. These anhydride curing agents further provide epoxy thermosets that can lack dimensional stability at temperatures higher than 220°C.

U.S. Patent No. 3,989,573 discloses a glass reinforced, epoxy resin impregnated laminates, that retain good flexural strength at temperatures up to 200° C, are needed for slot liners and wedges in large rotating apparatus, and as copper clad printed circuit boards.

U.S. Patent Pub. No. 2014/005344 discloses a hardener system for epoxy resins comprising i) at least one aromatic dianhydride compound having a melting point of at least 35°C, at least one monoanhydride compound having a melting point of not more than 30°C, and at least one catalyst.

WO 2009/129088 discloses a process of forming a solid epoxy-imidazole catalyst that includes contacting an imidazole, an amine, and one or more epoxy resins, in the absence of added solvent, to form a solid epoxy-imidazole catalyst.

U.S. Patent No. 3,914,512 discloses a stable diaryl dianhydride-epoxy resin solution for preparing handleable, formable resin-impregnated reinforcing material and fully cured laminates.

Accordingly, there remains a need for curable epoxy compositions suitable for making thermoset (cured) epoxies for high heat applications.

### BRIEF SUMMARY

Provided is a curable epoxy composition including 100 parts by weight of an epoxy resin composition comprising one or more epoxy resins, each independently having an epoxy equivalent weight of at least 2; 30 to 200 parts by weight of an aromatic dianhydride curing agent of the formula 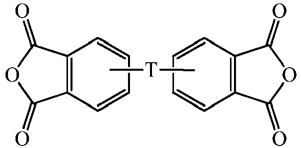 wherein T is -O-, -S-, -C(O)-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof; and 0.1 to 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen, wherein the composition does not comprise a monoanhydride curing agent.

Provided is a method for the manufacture of the curable epoxy composition, the method including combining the epoxy resin composition and the aromatic dianhydride curing agent at a temperature of 100 to 200°C, preferably 120 to 190°C, more preferably 130 to 180°C to provide a reaction mixture; cooling the reaction mixture to less than 100°C; and adding the heterocyclic accelerator to the reaction mixture, to provide the curable epoxy composition.

Also provided are a thermoset epoxy composition including the cured product of the curable epoxy composition, and an article including the thermoset epoxy composition.

Further provided is a method for the manufacture of a thermoset epoxy composition including curing the curable epoxy composition; preferably curing the curable epoxy composition by compression molding, injection molding, transfer molding, pultrusion, resin casting, or a combination thereof.

The above described and other features are exemplified by the following detailed description and examples.

### DETAILED DESCRIPTION

This disclosure relates to a curable epoxy composition including an epoxy resin, an aromatic dianhydride as curing agent, and a heterocyclic accelerator (catalyst). The inventors have discovered that an aromatic dianhydride, for example bisphenol-A dianhydride (BPA-DA), can be a useful curing agent for making high heat cured epoxies. The curable epoxy composition including the aromatic dianhydride as an epoxy curing agent can provide a cured thermoset product having good high heat resistance properties, such as a glass transition temperature that can be greater than 230°C. Moreover, the curing time and heat of polymerization when using the curable epoxy composition may be less than those of other curable epoxy compositions that do not include the aromatic dianhydride curing agent. The disclosed curable epoxy composition and the corresponding cured thermoset product can be used in a variety of high heat applications including but not limited to adhesives, coatings, epoxy tooling compositions, potting compositions, and fiber-reinforced composites.

Provided herein is a curable epoxy composition including 100 parts by weight of an epoxy resin composition comprising one or more epoxy resins, each independently having an epoxy equivalent weight of at least 2; 30 to 200 parts by weight of an aromatic dianhydride curing agent; and 0.1 to 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur. In an aspect, each heteroatom of the heterocyclic accelerator is independently the same or different, and is nitrogen, oxygen, or sulfur. In a preferred aspect, the heteroatom of the heterocyclic accelerator is nitrogen.

The stoichiometric ratio between the aromatic dianhydride curing agent and the epoxy resin composition can be 0.1:1 to 2.0:1, preferably 0.4:1 to 1.2:1, more preferably 0.6:1 to 1:1. As used herein, "stoichiometric ratio" refers to the molar ratio of anhydride functionalities in the dianhydride curing agent to the epoxy functionalities in the epoxy resin composition. The stoichiometric ratio is also referred to herein as the anhydride to epoxy (A/E) ratio.

The curable epoxy composition can include 50 to 150, preferably 60 to 140, more preferably 80 to 120 parts by weight of the aromatic dianhydride curing agent; and 0.1 to 4, preferably 0.2 to 3, more preferably 0.5 to 2 parts by weight of the heterocyclic accelerator, based on the total parts by weight of the epoxy resin composition and the aromatic dianhydride curing agent.

The epoxy resin composition can be a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof. In an aspect, the epoxy resin is bisphenol-A diglycidyl ether (BPA-DGE).

The aromatic dianhydride can be of the formula (1) 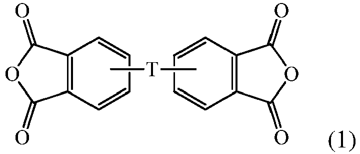 wherein T is -O-, -S-, -C(O)-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof. For example, R¹ can be a monovalent C₁₋₁₃ organic group. For example, T is -O- or a group of the formula -O-Z-O- wherein the divalent bonds of the -O- or the -O-Z-O-group are in the 3,3', 3,4', 4,3', or the 4,4' positions. In particular aspects, T is not -C(O)-.

Exemplary groups Z include groups of formula (2) 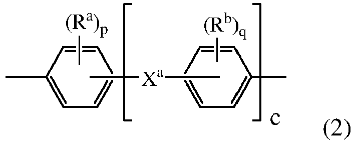 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further include heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of the formula (3a) or (3b) 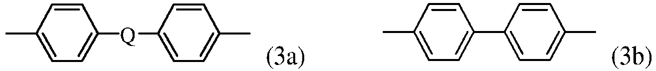 wherein Q is -O-, -S-, -C(O)-, -SO₂-, -SO-, -P(R^{c})(=O)- wherein R^{c} is a C₁₋₈ alkyl or C₆₋₁₂ aryl, or -C_{y}H_{2y}- wherein y is an integer from 1 to 5 or a halogenated derivative thereof (including a perfluoroalkylene group). For example, Q can be 2,2-isopropylidene. For example, T can be -O-Z-O-, preferably wherein Z is derived from bisphenol A (i.e., Z is 2,2-(4-phenylene)isopropylidene).

Exemplary aromatic dianhydrides include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and 4-(2,3-dicarboxyphenoxy)-4'-(3,4-dicarboxyphenoxy)diphenyl sulfone dianhydride. For example, the aromatic dianhydride curing agent can be bisphenol-A dianhydride.

The heterocyclic accelerator includes a substituted or unsubstituted C₃₋₆ heterocycle including 1 to 4 ring heteroatoms, wherein each heteroatom is independently the same or different, and is nitrogen, oxygen, phosphorus, silicon, or sulfur. For example, each heteroatom can be independently the same or different, and is nitrogen, oxygen, or sulfur. In a preferred aspect, the 1 to 4 ring heteroatoms are each nitrogen.

Exemplary accelerators include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane (DABCO), diazabicycloundecene (DBU), 2-phenyl imidazoline, or the like; N,N-dimethylaminopyridine (DMAP); sulfamidates; or a combination thereof.

The curable epoxy composition can further include an additive composition. The additive composition can include a particulate filler, a fibrous filler, a reinforcing material, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, flame retardant synergists such as antimony pentoxide, an anti-drip agent, a fragrance, an adhesion promoter, a flow enhancer, a coating additive, an additional polymer different from the thermoset (epoxy) polymer, or a combination thereof. In a preferred aspect, the additive composition comprises a flame retardant, a particulate filler, a fibrous filler, an adhesion promoter, a flow enhancer, a coating additive, a colorant, or a combination thereof.

The additive composition can include a particulate filler. The particulate filler can be alumina powder, hydrated alumina powder, quartz powder or fused quartz powder, glass fibers, carbon fibers, or a combination thereof. The curable composition can be a fibrous substrate (woven or non-woven) such as glass, quartz, polyester, polyimide, polypropylene, cellulose, carbon fibers and carbon fibrils, nylon or acrylic fibers, preferably a glass substrate, that can be impregnated with the curable composition (i.e., prepregs).

The curable epoxy composition can further include an additional cure accelerator different from the heterocyclic cure accelerator. The cure accelerator can be an amine cure accelerator, a term that also refers to amine curing agents and amine hardening accelerators. Exemplary amine cure accelerators include isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N'-bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3'-iminobispropylamine, 2,4-bis(p-aminobenzyl)aniline, tetraethylenepentamine, 3-diethylaminopropylamine, 2,2,4- and 2,4,4- trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, diethyl toluene diamines, or a combination thereof. The amine cure accelerator can be a tertiary amine cure accelerator, such as triethylamine, tributylamine, dimethylaniline, diethylaniline, benzyldimethylamine (BDMA), a-methylbenzyldimethylamine, *N,N*-dimethylaminoethanol, *N,N*-dimethylaminocresol, *tri(N,N-*dimethylaminomethyl)phenol, or a combination thereof. Amine cure accelerators can also be acid-base complexes such as a boron trifluoride-trialkylamine complex. Alternatively, the curable epoxy composition does not include an amine cure accelerator or is free from an amine cure accelerator.

The additional cure accelerator can be a phenolic hardener. Exemplary phenolic hardeners include novolac type phenol resins, resole type phenol resins, aralkyl type phenol resins, dicyclopentadiene type phenol resins, terpene modified phenol resins, biphenyl type phenol resins, bisphenols, triphenylmethane type phenol resins, or a combination thereof. Alternatively, the curable epoxy composition does not include a phenolic hardener or is free from a phenolic hardener.

The additional cure accelerator can be a latent cationic cure catalyst such as diaryliodonium salts, phosphonic acid esters, sulfonic acid esters, carboxylic acid esters, phosphonic ylides, triarylsulfonium salts, benzylsulfonium salts, aryldiazonium salts, benzylpyridinium salts, benzylammonium salts, isoxazolium salts, or a combination thereof. The diaryliodonium salt can have the structure [(R¹⁰)(R¹¹)I]⁺ X⁻, wherein R¹⁰ and R¹¹ are each independently a C₆-C₁₄ monovalent aromatic hydrocarbon radical, optionally substituted with from 1 to 4 monovalent radicals selected from C₁-C₂₀ alkyl, C₁-C₂₀ alkoxy, nitro, and chloro; and wherein X⁻ is an anion. The additional cure accelerator can have the structure [(R¹⁰)(R¹¹)I]⁺ SbF₆⁻, wherein R¹⁰ and R¹¹ are each independently a C₆-C₁₄ monovalent aromatic hydrocarbon radical, optionally substituted with from 1 to 4 monovalent radicals selected from C₁-C₂₀ alkyl, C₁-C₂₀ alkoxy, nitro, and chloro. For example the additional cure accelerator can be a latent cationic cure catalyst comprising 4-octyloxyphenyl phenyl iodonium hexafluoroantimonate. The latent cationic cure catalysts also include metal salts including copper (II), tin (II), and aluminum (III) salts of an aliphatic or aromatic carboxylic acid, such as acetate, stearate, gluconate, citrate, benzoate, and mixtures thereof; copper (II), tin (II), or aluminum (III) β-diketonates such as acetylacetonate. Alternatively, the curable epoxy composition does not include a latent cationic cure catalyst or is free from a latent cationic cure catalyst.

The curable epoxy composition contains no monoanhydride component (e.g., does not comprise a monoanhydride curing agent or is free of monoanhydride curing agents). The curable epoxy composition can also be free of (contain no) solvent, reactive diluent, or a combination thereof. As used herein, "reactive diluent" is a reactive compound that includes a monoanhydride functionality. For example, monoanhydride curing agents include norbornene dicarboxylic anhydrides (e.g., methyl-5-norbornene-2,3-dicarboxylic anhydride, or the like), hexahydrophthalic anhydrides (e.g., 1,2-cyclohexanedicarboxylic anhydride, 4-methylhexahydrophthalic anhydride, 5-methylhexahydrophthalic anhydride, or the like), tetrahydrophthalic anhydrides (e.g., 1,2,3,6-tetrahydrophthalic anhydride, 1,2,3,6-tetrahydro-4-methylphthalic anhydride, or the like), phthalic anhydrides (e.g., 3-fluorophthalic anhydride), maleic anhydrides (e.g., 2-methylmaleic anhydride, dimethylmaleic anhydride, or the like), succinic anhydrides (e.g., dodecenylsuccinic anhydride, hexadecenylsuccinic anhydride, or the like), trimellitic anhydride, perfluoroglutaric anhydride, or the like.

As used herein, when the curable epoxy composition is free of a component or contains none of a component (e.g., a monoanhydride curing agent and/or a reactive diluent), the component is present in the curable epoxy composition in an amount of 100 parts per million by weight (ppm) or less, preferably 75 ppm or less, more preferably 50 ppm or less, even more preferably 25 ppm or less, still more preferably 10 ppm or less, based on the total weight of the curable epoxy composition.

The curable composition can further include a poly(phenylene ether) copolymer. The poly(phenylene ether) copolymer can be used as a reactive component in the curable composition because it is bifunctional, with two reactive phenolic groups. For example, the curable epoxy composition can further comprise 1 to 100 parts by weight of the poly(phenylene ether) copolymer.

The curable epoxy composition can be manufactured by combining the epoxy resin composition and the aromatic dianhydride curing agent at a temperature of 100 to 200°C, preferably 120 to 190°C, more preferably 130 to 180°C to provide a reaction mixture. The reaction mixture can be subsequently cooled, for example to less than 100°C, and the heterocyclic accelerator can be added to the reaction mixture, to provide the curable epoxy composition.

The curable epoxy composition and/or the reaction mixture can be prepared without solvent and therefore be substantially free of solvent. In some aspects, the curable epoxy composition can be substantially free of solvent. The term "substantially free of solvent" means that the curable epoxy composition and/or the reaction mixture contains less than 500 parts per million by weight (ppm) of solvent. A "solvent free" curable epoxy composition and/or reaction mixture can have greater than 0 to 450 ppm, preferably greater than 0 to 300 ppm, more preferably greater than 0 to 200 ppm, even more preferably greater than 0 to 100 ppm of solvent, based on the total weight of the curable epoxy composition and/or reaction mixture.

Alternatively, the reaction mixture further includes a solvent. Exemplary solvents include C₃-C₈ ketones, C₄-C₈ *N,N*-dialkylamides, C₄-C₁₆ dialkyl ethers, C₆-C₁₂ aromatic hydrocarbons, C₃-C₆ alkyl alkanoates, C₂-C₆ alkyl nitriles, C₂-C₆ dialkyl sulfoxides, or a combination thereof. Examples of C₃-C₈ ketones include acetone, methyl ethyl ketone, methyl isobutyl ketone, and combinations thereof. Examples of C₄-C₈ *N,N*-dialkylamides include dimethylformamide, dimethylacetamide, *N*-methyl-2-pyrrolidone, and combinations thereof. Examples of C₄-C₁₆ dialkyl ethers include tetrahydrofuran, dioxane, and combinations thereof. The C₄-C₁₆ dialkyl ether can optionally further include one or more ether oxygen atoms within the alkyl groups and one or more hydroxy substituents on the alkyl groups, for example the C₄-C₁₆ dialkyl ether can be ethylene glycol monomethyl ether. The aromatic hydrocarbon solvent can be an ethylenically unsaturated solvent. Examples of C₆-C₁₂ aromatic hydrocarbons include benzene, toluene, xylenes, styrene, divinylbenzenes, and combinations thereof. Examples of C₃-C₆ alkyl alkanoates include methyl acetate, ethyl acetate, methyl propionate, ethyl propionate, and combinations thereof. Examples of C₂-C₆ alkyl cyanides include acetonitrile, propionitrile, butyronitrile, and combinations thereof. Examples of C₂-C₆ dialkyl sulfoxides include dimethyl sulfoxide, methyl ethyl sulfoxide, diethyl sulfoxide, and combinations thereof. For example, the solvent can be acetone, methyl ethyl ketone, *N*-methyl-2-pyrrolidone, toluene, or a combination thereof. In another example, the solvent can be a halogenated solvent such as methylene chloride, chloroform, 1,1,1-trichloroethane, chlorobenzene, or the like.

Also provided is a cured composition including the product obtained by curing or from curing the curable composition. The cured composition can exhibit a single glass transition temperature (Tg), such as a single Tg greater than or equal to 170°C, preferably greater than or equal to 180°C, more preferably greater than or equal to 200°C, or 220°C, or 240°C. For example, the cured composition can have a single Tg of 200°C to 280°C, preferably 210°C to 270°C, more preferably 220°C to 270°C, even more preferably 230°C to 270°C. The glass transition temperature can be determined using dynamic mechanical analysis (DMA) performed from -40°C to 300°C with a temperature ramp of 3 °C/min. Alternatively, Tg can be determined using differential scanning calorimetry (DSC) performed from 23 to 300°C with a heating rate of 10 °C/minute or 20 °C/minute.

Also provided is a method for the manufacture of a thermoset epoxy composition that includes curing the curable epoxy composition. There is no particular limitation on the method by which the composition may be cured. The composition can, for example, be cured thermally or by using irradiation techniques, including UV irradiation and electron beam irradiation. When heat curing is used, the temperature can be 80 to 300°C, preferably 100 to 250°C, more preferably 120 to 240°C. The heating period can be 1 minute to 10 hours, preferably 1 minute to 6 hours, more preferably 1 hour to 6 hours, even more preferably 3 hours to 5 hours. Such curing may be staged to produce a partially cured and often tack-free resin, which then can be fully cured by heating for longer periods or temperatures within the aforementioned ranges.

The curable epoxy composition can be cured by compression molding, injection molding, transfer molding, pultrusion, resin casting, or a combination thereof. For example, the curable epoxy composition can be disposed in, for example injected into, a mold and then cured at 150 to 250°C in the mold. Various molded articles or components can be prepared in this manner, including those described herein.

The resulting thermoset epoxy composition after curing can be clear and/or transparent. For example, thermoset epoxy composition after curing can have a total transmission of greater than 50%, preferably greater than 70%, more preferably greater than 90%.

The thermoset epoxy composition can exhibit good ductility, good fracture toughness, unnotched Izod impact strength, and good tensile elongation.

The thermoset epoxy composition can exhibit increased char formation on pyrolysis.

The thermoset epoxy composition can exhibit low moisture absorption.

The thermoset epoxy composition can exhibit decreased shrinkage upon curing.

The thermoset epoxy composition can exhibit decreased dielectric properties.

The disclosed epoxides, curable compositions, and cured compositions can be used in a variety of applications and articles, including any applications where conventional epoxides are currently used. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container, such as those commonly used for packaging and containment in the paint and surface covering industries. In some instances the coated metal is aluminum or steel.

Articles that can be prepared using the disclosed curable compositions include, for example, electrical components and computer components. Other exemplary articles include, but are not limited to, components of transport, including bicycle, motorcycle, automotive, aircraft, and watercraft exterior and interior components. The article can be in the form of in the form of a composite, a foam, a fiber, a layer, a coating, an encapsulant, an adhesive, a sealant, a component, a prepreg, a casing, or a combination thereof. The disclosed curable compositions can be used for the production of composite materials for use in the aerospace industry. The curable composition can be used in forming composites used for printed circuit boards. Methods of forming composites for use in printed circuit boards are known in the art and are described in, for example, U.S. Pat. No. 5,622,588 to Weber, U.S. Pat. No. 5,582,872 to Prinz, and U.S. Pat. No. 7,655,278 to Braidwood.

Additional applications for the curable compositions include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and fairings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cutoff devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Methods of forming a composite can include impregnating a reinforcing structure with a curable composition; partially curing the curable composition to form a prepreg; and laminating one or a plurality of prepregs. The lamination can include disposing an additional layer, e.g., an electrically conductive layer or an adhesive or bond ply on a side of a prepreg before lamination. The lamination can include disposing an additional layer, e.g., an electrically conductive layer or an adhesive or bond ply on a side of a prepreg before lamination.

Reinforcing structures suitable for prepreg formation are known in the art. Exemplary reinforcing structures include reinforcing fabrics. Reinforcing fabrics include those having complex architectures, including two or three-dimensional braided, knitted, woven, and filament wound. The curable composition is capable of permeating such complex reinforcing structures. The reinforcing structure can include fibers of materials known for the reinforcement of plastics material, for example fibers of carbon, glass, metal, and aromatic polyamides. Exemplary reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure can be selected according to the intended use of the composite using criteria known to those skilled in the production of fiber reinforced resin composites. The reinforced structure can include various finishes suitable for the epoxy matrix.

The method of forming the composite can include partially curing the curable composition after the reinforcing structure has been impregnated therewith. Partial curing can be curing sufficient to reduce or eliminate the wetness and tackiness of the curable composition, but not so great as to fully cure the composition. The resin in a prepreg is customarily in the partially cured state, and those skilled in the thermoset arts, and particularly the reinforced composite arts, understand the concept of partial curing and how to determine conditions to partially cure a resin without undue experimentation. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. For example, one can analyze a sample by differential scanning calorimetry to look for an exotherm indicative of additional curing occurring during the analysis. A sample that is partially cured will exhibit an exotherm. A sample that is substantially fully cured will exhibit little or no exotherm. For example, in addition to the conditions described above, partial curing can be effected by subjecting the curable-composition-impregnated reinforcing structure to a temperature of 133 to 140°C for 4 to 10 minutes.

Commercial-scale methods of forming composites are known in the art, and the curable compositions described herein are readily adaptable to such processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable composition. The varnish impregnates the reinforcing structure. After emerging from the tank, the coated reinforcing structure moves upward through the vertical treater oven, which is typically at a temperature of 175 to 200°C, and the solvent of the varnish is boiled away. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

While the above-described curing methods rely on thermal curing, it is also possible to effect curing with radiation, including ultraviolet (UV) light and electron beams. Combinations of thermal curing and radiation curing can also be used.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay-up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. For example, an article can be prepared from the disclosed curable compositions via a resin transfer molding process.

This disclosure is further illustrated by the following examples, which are nonlimiting.

### EXAMPLES

Materials used in the examples are described in Table 1.

**Table 1**

| Component | Description | Source |
|---|---|---|
| BPA-DGE | Diglycidyl ether of bisphenol A, CAS Reg. No. 1675-54-3. | Sigma-Aldrich |
| BPA-DA | Bisphenol-A dianhydride, CAS Reg. No. 38103-06-9. | SABIC |
| 2,4-EMI | 2-Ethyl-4-methylimidazole, CAS Reg. No. 931-36-2. | Sigma-Aldrich |
| MTHPA | Tetrahydro-4-methylphthalic anhydride, CAS Reg. No. 34090-76-1. | TCI Chemicals |
| MHHPA | Hexahydro-4-methylphthalic anhydride, CAS Reg. No. 19438-60-9. | Sigma-Aldrich |
| NMA | Methyl-5-norbornene-2,3-dicarboxylic anhydride, CAS Reg. No. 25134-21-8. | Sigma-Aldrich |
| THPA | 1,2,3,6-Tetrahydrophthalic anhydride, CAS Reg. No. 85-43-8. | Sigma-Aldrich |
| HHPA | 1,2-Cyclohexanedicarboxylic anhydride, CAS Reg. No. 85-42-7. | Sigma-Aldrich |

### Sample Preparation

### Example 1

BPA-DGE is heated at 160 °C and combined with BPA-DA at an anhydride to epoxy (A/E) ratio of 0.4:1. A homogenous and transparent reaction mixture is afforded. The reaction mixture was cooled to 90 °C, and 1 wt% of 2,4-EMI was added while stirring. The resulting mixture was poured into a preheated mold (130 °C) and then cured in the mold at 220 °C for 60 minutes to provide a rigid and clear casting.

### Example 2

The same procedure as Example 1 was followed, except the A/E ratio was 0.6:1.

### Example 3

The same procedure as Example 1 was followed, except the A/E ratio was 0.8:1.

### Example 4

The same procedure as Example 1 was followed, except the A/E ratio was 1:1.

### Example 5

The same procedure as Example 1 was followed, except the A/E ratio was 1.2:1.

### Example 6

The same procedure as Example 3 was followed, except the resulting mixture was cured in the mold at 150 °C for 30 minutes, 175 °C for 30 minutes, 200 °C for 30 minutes, and 220 °C for 90 minutes.

### Comparative Example 1

BPA-DGE was combined with MTHPA at 23 °C with an anhydride to epoxy (A/E) ratio of 0.8:1. 2,4-EMI (1 wt%) was then added while stirring and the reaction mixture was heated at 90 °C. The reaction mixture was then poured into a preheated mold (130 °C) and cured in the mold at 150 °C for 30 minutes, 175 °C for 30 minutes, 200 °C for 30 minutes, and 220 °C for 90 minutes to provide a rigid and clear casting.

### Comparative Example 2

The same procedure as Comparative Example 1 was used, except the curing agent was MHHPA instead of MTHPA.

### Comparative Example 3

The same procedure as Comparative Example 1 was used, except the curing agent was NMA instead of MTHPA.

### Comparative Example 4

BPA-DGE was combined with THPA at 60°C with mechanical stirring and at an anhydride to epoxy (A/E) ratio of 0.8:1. The reaction mixture was cooled to 23°C, 2,4-EMI (1 wt%) was added while stirring, and the resulting mixture was heated to 60°C. The mixture was then poured into a preheated mold (100°C) and cured in the mold at 100°C for 30 minutes, 150°C for 30 minutes, 175°C for 30 minutes, 200°C for 30 minutes, and 220°C for 90 minutes to provide a rigid and clear casting.

### Comparative Example 5

BPA-DGE was combined with HHPA at 60°C with mechanical stirring and at an anhydride to epoxy (A/E) ratio of 0.8:1. The reaction mixture was cooled to 23°C, 2,4-EMI (1 wt%) was added while stirring, and the resulting mixture was heated to 60°C. The mixture was then poured into a preheated mold (130°C) and cured in the mold at 150°C for 30 minutes, 175°C for 30 minutes, 200°C for 30 minutes, and 220°C for 90 minutes to provide a rigid and clear casting.

### Sample Analysis

The glass transition temperature (Tg) was determined by dynamic mechanical analysis (DMA) using an RDA III DMA from Rheometric Scientific. Sample bars were prepared (40 mm length, 4 mm width, and 6 mm thickness) and analyzed at -40°C to 300°C with a temperature ramp of 3 °C/min and at a frequency of 6.283 radians per second.

The enthalpy of the curing reaction and peak temperature were obtained by differential scanning calorimetry (DSC) on a Discovery DSC from TA Instruments. Samples were analyzed from 23 to 300°C with a heating rate of 20 °C/minute under a nitrogen atmosphere.

Thermo-gravimetric analysis (TGA) was used to evaluate thermal stability using a TGA Q5000 from TA Instruments. Samples were analyzed at 23 to 800°C with a heating rate of 10 °C/minute in nitrogen media with a flow rate of 50 mL per minute.

Table 2 shows the Tg (°C), enthalpy of curing (Joules per gram, J/g), and peak temperature (°C) for Examples 1 to 5.

**Table 2**

| | A/E Ratio | Tg (°C) | Enthalpy (J/g) | Peak Temperature (°C) |
|---|---|---|---|---|
| Example 1 | 0.4:1 | 233 | 123 | 143.5 |
| Example 2 | 0.6:1 | 246 | 170 | 144.5 |
| Example 3 | 0.8:1 | 264 | 167 | 146.4 |
| Example 4 | 1:1 | 251 | 170 | 146 |
| Example 5 | 1.2:1 | 231 | 151 | 154 |

Examples 1 to 5 had glass transition temperatures of greater than 230°C by DMA. Example 3 had the highest glass transition temperature at 264°C.

The thermal stability was then evaluated. Table 3 shows the onset temperature (Tₒₙₛₑₜ), maximum temperature (Tₘₐₓ), and char yield for Examples 1 to 5.

**Table 3**

| | A/E Ratio | Tₒₙₛₑₜ (°C) | Tₘₐₓ (°C) | Char Yield (%) |
|---|---|---|---|---|
| Example 1 | 0.4:1 | 354 | 384 | 27.8 |
| Example 2 | 0.6:1 | 352 | 379 | 30.9 |
| Example 3 | 0.8:1 | 356 | 377 | 31.1 |
| Example 4 | 0.1:1 | 353 | 378 | 32.1 |
| Example 5 | 1.2:1 | 357 | 379 | 26.9 |

Examples 1 to 5 were thermally stable to at least 350°C and had char yields of 27 to 32 wt%. These results suggest that BPA-DA can be used as a curing agent to provide epoxy resins suitable for high heat applications.

The samples cured in the mold were next evaluated. Table 4 shows the Tg of Example 6 and Comparative Examples 1 to 5.

**Table 4**

| | Tg (°C) |
|---|---|
| Example 6 | 265 |
| Comparative Example 1 | 148.4 |
| Comparative Example 2 | 160 |
| Comparative Example 3 | 182.5 |
| Comparative Example 4 | 152.5 |
| Comparative Example 5 | 139.3 |

As shown in Table 4, Example 6 had the highest glass transition temperature of 264°C. None of Comparative Examples 1 to 5 had a glass transition temperature of greater than 183°C.

Table 5 shows the enthalpy of the curing reaction and peak temperature for Example 6 and Comparative Examples 1 to 5.

**Table 5**

| | Enthalpy (J/g) | Peak Temperature (°C) |
|---|---|---|
| Example 6 | 171 | 146 |
| Comparative Example 1 | 317 | 164 |
| Comparative Example 2 | 342 | 163 |
| Comparative Example 3 | 303 | 179 |
| Comparative Example 4 | 277 | 175 |
| Comparative Example 5 | 373 | 166 |

As shown in Table 5, Example 6 releases least amount of heat during reaction with BPA-DGE. In contrast, Comparative Examples 1 to 5 had reaction enthalpies of greater than 275 J/g. Similarly, Example 6 had a lower peak temperature relative to Comparative Examples 1 to 5.

The term "hydrocarbyl" or "hydrocarbon" refers broadly to a monovalent group containing carbon and hydrogen, optionally with 1 to 3 heteroatoms such as a halogen, N, O, S, Si, P, or a combination thereof. Exemplary hydrocarbyls include alkyl, cycloalkyl, alkenyl, cycloalkenyl, aryl, alkylaryl, or arylalkyl as defined below. The term "hydrocarbylene" refers to a divalent hydrocarbyl group. Hydrocarbylene include alkylene, cycloalkylene, arylene, alkylarylene, or arylalkylene as defined below. The term "alkyl" means a branched or straight chain, saturated monovalent hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least two carbons joined by a carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent hydrocarbon group (e.g., methylene (-CH₂-) and propylene (-(CH₂)₃-)). "Cycloalkyl" means a non-aromatic monovalent monocyclic or multicyclic hydrocarbon group having at least three carbon atoms. "Cycloalkylene" means a divalent cycloalkyl group. "Cycloalkenyl" means a monovalent group having one or more rings and one or more carbon-carbon double bonds in the ring, wherein all ring members are carbon (e.g., cyclopentenyl and cyclohexenyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group. "Aryloxy" means an aryl group with the indicated number of carbon atoms attached through an oxygen bridge (-O-). "Amino" means a monovalent radical of the formula -NRR' wherein R and R' are independently hydrogen or a C₁-C₃₀ hydrocarbyl, for example a C₁-C₂₀ alkyl group or a C₆-C₃₀ aryl group. "Halogen" or "halogen atom" means a fluorine, chlorine, bromine, or iodine atom. The prefix "halo" means a group or compound including one more of a fluoro, chloro, bromo, or iodo substituents. A combination of different halo groups (e.g., bromo and fluoro), or only chloro groups can be present. The prefix "hetero" means that the compound or group includes at least one member or ring member that is a heteroatom (e.g., 1, 2, or 3 heteroatom(s)), wherein the heteroatom(s) is each independently N, O, S, Si, or P. The suffix "oxy" indicates that the open valence of the group is on an oxygen atom and the suffix "thio" indicates that the open valence of the group is on a sulfur atom.

Unless substituents are otherwise specifically indicated, each of the foregoing groups can be unsubstituted or substituted, provided that the normal valence of the substituted atom is not exceeded, and that the substitution does not significantly adversely affect the manufacture, stability, or desired property of the compound. "Substituted" means that an atom of the group is substituted with at least one (e.g., 1, 2, 3, or 4) substituent instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g., toluyl), C₆₋₁₀ aryloxy (e.g., phenoxy), C₄₋₁₂ heterocycloalkyl, C₃₋₁₂ heteroaryl, C₁₋₆ alkylthio, C₁₋₆ alkylsulfinyl, C₁₋₆ alkyl sulfonyl (-S(=O)₂-alkyl), C₆₋₁₂ arylsulfonyl (-S(=O)₂-aryl), or tosyl (CH₃C₆H₄SO₂-)- When the substituent is oxo (i.e., =O), then two hydrogens on an atom of the group are replaced. When a group is substituted, the indicated number of carbon atoms is the total number of carbon atoms in the compound or group, excluding those of any substituents. For example, -CH₂CH₂CN is a C₂ alkyl group substituted with a cyano substituent.

## Claims

1. A curable epoxy composition, comprising:
100 parts by weight of an epoxy resin composition comprising one or more epoxy resins, each independently having an epoxy equivalent weight of at least 2;
30 to 200 parts by weight of an aromatic dianhydride curing agent of the formula 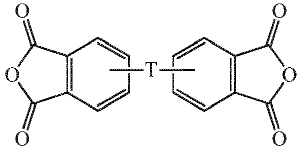 wherein T is -O-, -S-, -C(O)-, -SO₂-, -SO-, -C_{y}H_{2y}- wherein y is an integer from 1 to 5 or a halogenated derivative thereof, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination thereof; and
0.1 to 5 parts by weight of a heterocyclic accelerator, based on the total parts by weight of the epoxy resin composition and the aromatic dianhydride curing agent, wherein the heterocyclic accelerator comprises a substituted or unsubstituted C₃₋₆ heterocycle comprising 1 to 4 ring heteroatoms, wherein each heteroatom is independently the same or different, and is nitrogen, oxygen, phosphorus, silicon, or sulfur, preferably nitrogen, oxygen, or sulfur, more preferably nitrogen,
wherein the composition does not contain a monoanhydride curing agent.

2. The curable epoxy composition of claim 1, wherein an anhydride to epoxy stoichiometric ratio (A/E) is 0.1:1 to 2.0:1, preferably 0.4:1 to 1.2:1, more preferably 0.6:1 to 1:1.

3. The curable epoxy composition of any one or more of the preceding claims, wherein the epoxy resin composition comprises a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof.

4. The curable epoxy composition of any one or more of the preceding claims, wherein T is -O- or a group of the formula -O-Z-O- wherein Z is of the formula 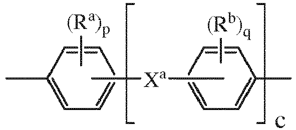 wherein
R^{a} and R^{b} are each independently the same or different, and are a halogen atom or a monovalent C₁₋₆ alkyl group,
X^{a} is a single bond, -O-, -S-, -S(O)-, -S(O)₂-, -C(O)-, or a C₁₋₁₈ organic bridging group, preferably a single bond, -O-, -S-, -S(O)-, -S(O)₂-, or a C₁₋₁₈ organic bridging group, more preferably a C₁₋₁₈ organic bridging group, and
p, q, and c are each independently integers of 0 to 4.

5. The curable epoxy composition of claim 4, wherein Z is a divalent group of formula 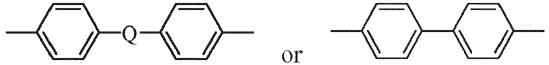 wherein Q is -O-, -S-, -C(O)-, -SO₂-, -SO-, -P(R^{c})(=O)- wherein R^{C} is a C₁₋₈ alkyl or C₆₋₁₂ aryl, or -C_{y}H_{2y}- wherein y is an integer from 1 to 5 or a halogenated derivative thereof, preferably wherein Q is 2,2-isopropylidene.

6. The curable epoxy composition of any one or more of the preceding claims, wherein the epoxy resin composition comprises bisphenol-A diglycidyl ether and the aromatic dianhydride curing agent comprises bisphenol-A dianhydride.

7. The curable epoxy composition of any one or more of the preceding claims, wherein the heterocyclic accelerator comprises a C₃₋₄ five-membered ring wherein the ring heteroatoms are one or two nitrogen atoms; preferably a C₃ five-membered ring wherein the ring heteroatoms are nitrogen atoms.

8. The curable epoxy composition of any one or more of the preceding claims, further comprising at least one of
a cure accelerator different from the heterocyclic cure accelerator; or
an additive composition;
preferably wherein the additive composition comprises a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the epoxy resins, or a combination thereof.

9. A method for the manufacture of the curable epoxy composition of any one or more of the preceding claims, the method comprising:
combining the epoxy resin composition and the aromatic dianhydride curing agent at a temperature of 100 to 200°C, preferably 120 to 190°C, more preferably 130 to 180°C, to provide a reaction mixture;
cooling the reaction mixture to a temperature of less than 100°C; and
adding the heterocyclic accelerator to the reaction mixture to provide the curable epoxy composition.

10. The method of claim 11, wherein the reaction mixture is substantially free of solvent.

11. A thermoset epoxy composition comprising a cured product of the curable epoxy composition of any one or more of the preceding claims.

12. The thermoset epoxy composition of claim 11, which after curing has at least one of:
a glass transition temperature of greater than or equal to 170°C, preferably greater than or equal to 180°C, more preferably greater than or equal to 200°C, as determined by dynamic mechanical analysis; or
a total transmission of greater than 50%, preferably greater than 70%, more preferably greater than 90%.

13. An article comprising the thermoset epoxy composition of claim 11 or 12, preferably wherein the article is in the form of in the form of a composite, a foam, a fiber, a layer, a coating, an encapsulant, an adhesive, a sealant, a component, a prepreg, a casing, or a combination thereof.

14. A method for the manufacture of a thermoset epoxy composition, the method comprising:
curing the curable epoxy composition of any one or more of claims 1 to 8;
preferably wherein the curing comprises compression molding, injection molding, transfer molding, pultrusion, resin casting, or a combination thereof.

15. The method of claim 14, wherein the curing is a temperature of 300°C or less for a time of 6 hours or less;
preferably wherein the curing comprises disposing the curable epoxy composition into a mold, and curing the epoxy resin composition at 150°C to 250°C in the mold.

## Patentansprüche

1. Eine härtbare Epoxidzusammensetzung, die Folgendes umfasst:
100 Masseteile einer Epoxidharzzusammensetzung, die einen oder mehrere Epoxidharze umfasst, die jeweils unabhängig eine Epoxid-Äquivalentmasse von mindestens 2 haben;
30 bis 200 Masseteile eines aromatischen Dianhydrid-Härtungsmittels mit der Formel 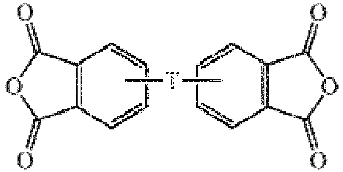 worin T -O-, -S-, -C(O)-, -SO₂-, -SO-, -C_{y}H_{2y}- ist, worin y eine ganze Zahl von 1 bis 5 oder ein halogeniertes Derivat davon ist, oder -O-Z-O-, worin Z ein aromatischer monocyclischer oder polycyclischer C₆₋₂₄-Anteil ist, wahlweise substituiert mit 1 bis 6 C₁₋₈-Alkylgruppen, 1 bis 8 Halogenatomen, oder eine Kombination davon; und
0,1 bis 5 Masseteile eines heterocyclischen Akzelerators, basierend auf den Gesamt-Masseteilen der Epoxidharzzusammensetzung und des aromatischen Dianhydrid-Härtungsmittels, wobei der heterocyclische Akzelerator einen substituierten oder unsubstituierten C₃₋₆-Heterocyclus umfasst, der 1 bis 4 Ring-Heteroatome umfasst, wobei jedes Heteroatom unabhängig gleich oder unterschiedlich ist und Stickstoff, Sauerstoff, Phosphor, Silizium oder Schwefel, vorzugsweise Stickstoff, Sauerstoff oder Schwefel, stärker bevorzugt Stickstoff ist,
wobei die Zusammensetzung kein Monoanhydrid-Härtungsmittel enthält.

2. Die härtbare Epoxidzusammensetzung gemäß Anspruch 1, worin ein stöchiometrisches Anhydrid-zu-Epoxid-Verhältnis (A/E) 0,1:1 bis 2,0:1, vorzugsweise 0,4:1 bis 1,2:1, stärker bevorzugt 0,6:1 bis 1:1, beträgt.

3. Die härtbare Epoxidzusammensetzung gemäß einem beliebigen oder mehreren der obigen Ansprüche, wobei die Epoxidharzzusammensetzung ein Bisphenol A-Epoxidharz, ein Triglycidyl-substituiertes Epoxidharz, ein Tetraglycidylsubstituiertes Epoxidharz, ein Bisphenol F-Epoxidharz, ein Phenolnovolak-Epoxidharz, ein Cresolnovolak-Epoxidharz, ein cycloaliphatisches Diglycidylester-Epoxidharz, ein cycloaliphatisches Epoxidharz, das eine Ring-Epoxidgruppe umfasst, ein Epoxidharz, das einen Spiro-Ring enthält, ein Hydantoin-Epoxidarz oder eine Kombination davon umfasst.

4. Die härtbare Epoxidzusammensetzung gemäß einem beliebigen oder mehreren der obigen Ansprüche, worin T -O- oder eine Gruppe mit der Formel -O-Z-O- ist, worin Z die Formel 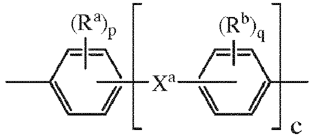 hat,
worin
R^{a} und R^{b} jeweils unabhängig gleich oder unterschiedlich sind und ein Halogenatom oder eine einwertige C₁₋₆-Alkylgruppe sind, X^{a} eine Einfachbindung, -O-, -S-, -S(O)-, -S(O)₂-, -C(O)- oder eine organische Brücken bildende C₁₋₁₈-Gruppe, vorzugsweise eine Einfachbindung, -O-, -S-, -S(O)-, -S(O)₂- oder eine organische Brücken bildende C₁₋₁₈-Gruppe, stärker bevorzugt eine organische Brücken bildende C₁₋₁₈-Gruppe, ist und
p, q und c jeweils unabhängig ganze Zahlen von 0 bis 4 sind.

5. Die härtbare Epoxidzusammensetzung gemäß Anspruch 4, worin Z eine zweiwertige Gruppe mit der Formel 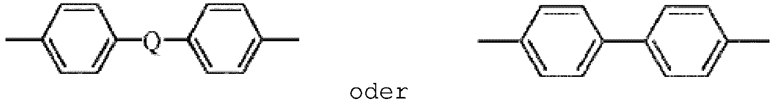 ist,
worin Q -O-, -S-, -C(O)-, -SO₂-, -SO-, -P(R^{c})(=O)-, worin R^{c} ein C₁₋₈-Alkyl oder C₆₋₁₂-Aryl ist, oder -C_{y}H_{2y}- ist, worin y eine ganze Zahl von 1 bis 5 oder ein halogeniertes Derivat davon ist, worin Q vorzugsweise 2,2-Isopropyliden ist.

6. Die härtbare Epoxidzusammensetzung gemäß einem beliebigen oder mehreren der obigen Ansprüche, wobei die Epoxidharzzusammensetzung Bisphenol A-Diglycidylether umfasst und das aromatische Dianhydrid-Härtungsmittel Bisphenol A-Dianhydrid umfasst.

7. Die härtbare Epoxidzusammensetzung gemäß einem beliebigen oder mehreren der obigen Ansprüche, wobei der heterocyclische Akzelerator einen fünfgliedrigen C₃₋₄-Ring umfasst, worin die Ring-Heteroatome ein oder zwei Stickstoffatome sind; vorzugsweise einen fünfgliedrigen C₃-Ring, worin die Ring-Heteroatome Stickstoffatome sind.

8. Die härtbare Epoxidzusammensetzung gemäß einem beliebigen oder mehreren der obigen Ansprüche, die weiter mindestens eines von Folgendem umfasst:
einem Härtungsakzelerator, der sich vom heterocyclischen Härtungsakzelerator unterscheidet; oder
eine additive Zusammensetzung; wobei die additive Zusammensetzung vorzugsweise einen partikulären Füllstoff, einen faserigen Füllstoff, ein Antioxidationsmittel, einem Wärmestabilisator, einen Lichtstabilisator, einen UV-Licht-Stabilisator, eine UV-Licht absorbierende Verbindung, eine Verbindung, die Licht im nahen Infrarotbereich absorbiert, eine Infrarotlicht absorbierende Verbindung, einen Weichmacher, ein Schmiermittel, ein Trennmittel, ein Antistatikum, ein Klarsichtmittel, ein antimikrobielles Mittel, einen Farbstoff, ein Oberflächeneffekt-Additiv, einen Strahlungsstabilisator, ein Flammverzögerungsmittel, ein Antitropfmittel, einen Duftstoff, einen Adhäsionsbeschleuniger, eine Rieselhilfe, ein Beschichtungsadditiv, ein Polymer, das sich von den Epoxidharzen unterscheidet, oder eine Kombination davon umfasst.

9. Ein Verfahren zur Herstellung der härtbaren Epoxidzusammensetzung gemäß einem beliebigen oder mehreren der obigen Ansprüche, wobei das Verfahren Folgendes umfasst:
das Kombinieren der Epoxidharzzusammensetzung und des aromatischen Dianhydrid-Härtungsmittels bei einer Temperatur von 100 bis 200°C, vorzugsweise 120 bis 190°C,
stärker bevorzugt 130 bis 180°C, um eine Reaktionsmischung bereitzustellen,
das Abkühlen der Reaktionsmischung auf eine Temperatur von weniger als 100°C und
das Hinzugeben des heterozyklischen Akzelerators zur Reaktionsmischung, um die härtbare Epoxidzusammensetzung bereitzustellen.

10. Das Verfahren gemäß Anspruch 11, wobei die Reaktionsmischung im Wesentlichen frei von Lösungsmittel ist.

11. Eine wärmehärtbare Epoxidzusammensetzung, die ein gehärtetes Produkt der härtbaren Epoxidzusammensetzung gemäß einem beliebigen oder mehreren der obigen Ansprüche umfasst.

12. Die wärmehärtbare Epoxidzusammensetzung gemäß Anspruch 11, die nach dem Härten mindestens eines von Folgendem hat:
eine Glasübergangstemperatur von mindestens 170°C, vorzugsweise mindestens 180°C, stärker bevorzugt mindestens 200°C, bestimmt durch dynamisch-mechanische Analyse; oder
eine Gesamtdurchlässigkeit von mehr als 50%, vorzugsweise mehr als 70%, stärker bevorzugt mehr als 90%.

13. Ein Gegenstand, der die wärmehärtbare Epoxidzusammensetzung gemäß Anspruch 11 oder 12 umfasst, wobei der Gegenstand vorzugsweise in Form eines Verbundstoffs, eines Schaums, einer Faser, einer Schicht, einer Beschichtung, eines Verkapselungsmittels, eines Klebstoffs, eines Dichtungsmittels, einer Komponente, eines Prepregs, eines Gehäuses oder einer Kombination davon vorliegt.

14. Ein Verfahren zur Herstellung einer wärmehärtbaren Epoxidzusammensetzung, wobei das Verfahren Folgendes umfasst:
das Härten der härtbaren Epoxidzusammensetzung gemäß einem beliebigen oder mehreren der Ansprüche 1 bis 8;
wobei das Härten vorzugsweise Formpressen, Spritzgießen, Spritzpressen, Pultrusion, Harzgießen oder eine Kombination davon umfasst.

15. Das Verfahren gemäß Anspruch 14, wobei das Härten bei einer Temperatur von 300°C oder weniger für einen Zeitraum von 6 Stunden oder weniger stattfindet;
wobei das Härten vorzugsweise das Hineingeben der härtbaren Epoxidzusammensetzung in eine Form und das Härten der Epoxidharzzusammensetzung bei 150°C bis 250°C in der Form umfasst.

## Revendications

1. Composition époxy durcissable, comprenant :
100 parties en poids d'une composition de résine époxy comprenant une ou plusieurs résines époxy, ayant chacune indépendamment un poids équivalent époxy d'au moins 2 ;
30 à 200 parties en poids d'un agent de durcissement de dianhydride aromatique de la formule 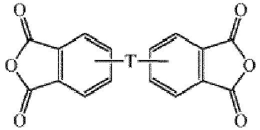
dans laquelle T est -O-, -S-, -C(O)-, -SO₂-, -SO-, -C_{y}H_{2y}- dans laquelle y est un nombre entier de 1 à 5 ou un dérivé halogéné de celui-ci, ou -O-Z-O- dans laquelle Z est un groupement aromatique en C6-24 monocyclique ou polycyclique optionnellement substitué par 1 à 6 groupes alkyles en C₁₋₈, 1 à 8 atomes d'halogène, ou une combinaison de ceux-ci ; et
0,1 à 5 parties en poids d'un accélérateur hétérocyclique, sur la base des parties totales en poids de la composition de résine époxy et de l'agent de durcissement de dianhydride aromatique, dans laquelle l'accélérateur hétérocyclique comprend un hétérocycle en C₃₋₆ substitué ou non substitué comprenant 1 à 4 hétéroatomes de noyau, dans laquelle chaque hétéroatome est indépendamment identique ou différent, et est de l'azote, de l'oxygène, du phosphore, du silicium ou du soufre, de préférence de l'azote, de l'oxygène ou du soufre, de manière davantage préférée de l'azote,
dans laquelle la composition ne contient pas d'agent de durcissement de monoanhydride.

2. Composition époxy durcissable selon la revendication 1, dans laquelle un rapport stœchiométrique anhydride/époxy (A/E) est de 0,1:1 à 2,0:1, de préférence de 0,4:1 à 1,2:1, de manière davantage préférée de 0,6:1 à 1:1.

3. Composition époxy durcissable selon une ou plusieurs quelconques des revendications précédentes, dans laquelle la composition de résine époxy comprend une résine époxy de bisphénol A, une résine époxy à substitution triglycidyle, une résine époxy à substitution tétraglycidyle, une résine époxy de bisphénol F, une résine époxy de novolaque phénolique, une résine époxy de novolaque de crésol, une résine époxy d'ester diglycidylique cycloaliphatique, une résine époxy cycloaliphatique comprenant un groupe époxy de noyau, une résine époxy contenant un noyau spiro, une résine époxy d'hydantoïne, ou une combinaison de celles-ci.

4. Composition époxy durcissable selon une ou plusieurs quelconques des revendications précédentes, dans laquelle T est -O- ou un groupe de la formule -O-Z-O- dans laquelle Z est de la formule 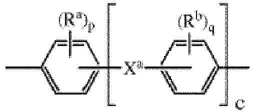 dans laquelle
R^{a} et R^{b} sont chacun indépendamment identiques ou différents, et sont un atome d'halogène ou un groupe alkyle monovalent en C₁₋₆,
X^{a} est une liaison simple, -O-, -S-, -S(O)-, -S(O)₂-, -C(O)-, ou un groupe de pontage organique en C₁₋₁₈, de préférence une liaison simple, -O-, -S-, -S(O)-, - S(O)2-, ou un groupe de pontage organique en C1-18, de manière davantage préférée un groupe de pontage organique en C1-18, et
p, q et c sont chacun indépendamment des nombres entiers de 0 à 4.

5. Composition époxy durcissable selon la revendication 4, dans laquelle Z est un groupe divalent de formule 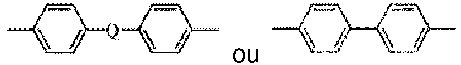 dans laquelle Q est -O-, -S-, -C(O)-, -SO₂-, -SO-, -P(R^{c})(=O)- dans laquelle R^{c} est un alkyle en C₁₋₈ ou un aryle en C₆₋₁₂, ou -C_{y}H_{2y}- dans laquelle y est un nombre entier de 1 à 5 ou un dérivé halogéné de celui-ci, de préférence dans laquelle Q est du 2,2-isopropylidène.

6. Composition époxy durcissable selon une ou plusieurs quelconques des revendications précédentes, dans laquelle la composition de résine époxy comprend de l'éther diglycidylique de bisphénol A et l'agent de durcissement de dianhydride aromatique comprend du dianhydride de bisphénol A.

7. Composition époxy durcissable selon une ou plusieurs quelconques des revendications précédentes, dans laquelle l'accélérateur hétérocyclique comprend un noyau à cinq chaînons en C₃₋₄ dans laquelle les hétéroatomes de noyau sont un ou deux atomes d'azote ; de préférence un noyau à cinq chaînons en C₃ dans laquelle les hétéroatomes du noyau sont des atomes d'azote.

8. Composition époxy durcissable selon une ou plusieurs quelconques des revendications précédentes, comprenant en outre au moins l'un de
un accélérateur de durcissement différent de l'accélérateur de durcissement hétérocyclique ; ou
une composition d'additif ;
de préférence dans laquelle la composition d'additif comprend une charge particulaire, une charge fibreuse, un antioxydant, un stabilisant thermique, un photostabilisant, un stabilisateur de lumière ultraviolette, un composé absorbant la lumière ultraviolette, un composé absorbant la lumière proche infrarouge, un composé absorbant la lumière infrarouge, un plastifiant, un lubrifiant, un agent de démoulage, un agent antistatique, un agent antibuée, un agent antimicrobien, un colorant, un additif à effet de surface, un stabilisateur de rayonnement, un agent ignifuge, un agent anti-goutte, un parfum, un promoteur d'adhérence, un activateur de flux, un additif de revêtement, un polymère différent des résines époxy, ou une combinaison de ceux-ci.

9. Procédé de fabrication de la composition époxy durcissable selon une ou plusieurs quelconques des revendications précédentes, le procédé comprenant :
une combinaison de la composition de résine époxy et de l'agent de durcissement de dianhydride aromatique à une température de 100 à 200 °C, de préférence de 120 à 190 °C, de manière davantage préférée de 130 à 180 °C, pour fournir un mélange réactionnel ;
un refroidissement du mélange réactionnel à une température inférieure à 100 °C ; et
un ajout de l'accélérateur hétérocyclique au mélange réactionnel pour fournir la composition époxy durcissable.

10. Procédé selon la revendication 11, dans lequel le mélange réactionnel est sensiblement exempt de solvant.

11. Composition époxy thermodurcie comprenant un produit durci de la composition époxy durcissable selon une ou plusieurs quelconques des revendications précédentes.

12. Composition époxy thermodurcie selon la revendication 11, qui après durcissement, a au moins :
une température de transition vitreuse supérieure ou égale à 170 °C, de préférence supérieure ou égale à 180 °C, de manière davantage préférée supérieure ou égale à 200 °C, telle que déterminée par analyse mécanique dynamique ; ou
une transmission totale supérieure à 50 %, de préférence supérieure à 70 %, de manière davantage préférée supérieure à 90 %.

13. Article comprenant la composition époxy thermodurcie selon la revendication 11 ou 12, de préférence dans lequel l'article est sous la forme d'un composite, d'une mousse, d'une fibre, d'une couche, d'un revêtement, d'un encapsulant, d'un adhésif, d'un produit d'étanchéité, d'un composant, d'un pré-imprégné, d'une enveloppe, ou d'une combinaison de ceux-ci.

14. Procédé de fabrication d'une composition époxy thermodurcie, le procédé comprenant :
un durcissement de la composition époxy durcissable selon une ou plusieurs quelconques des revendications 1 à 8 ;
de préférence dans lequel le durcissement comprend un moulage par compression, un moulage par injection, un moulage par transfert, une pultrusion, une coulée de résine, ou une combinaison de ceux-ci.

15. Procédé selon la revendication 14, dans lequel le durcissement est une température de 300 °C ou moins pendant un temps de 6 heures ou moins ;
de préférence dans lequel le durcissement comprend la disposition de la composition époxy durcissable dans un moule, et le durcissement de la composition de résine époxy à 150 °C à 250 °C dans le moule.
